# EUROPEAN PATENT SPECIFICATION

(11) **EP 2 491 372 B1**
(45) Date of publication and mention of the grant of the patent: **21.07.2021**
(21) Application number: 10773237.2
(22) Date of filing: 25.10.2010
(51) Int. Cl.: G01N 21/65

(54) **SURFACE ENHANCED RAMAN SCATTERING SUBSTRATES CONSUMABLES FOR RAMAN SPECTROSCOPY**
OBERFLÄCHENVERSTÄRKTE RAMANSTREUUNGSSUBSTRATE FÜR RAMAN-SPEKTROSKOPIE
SUBSTRATS DE DIFFUSION RAMAN A EXALTATION DE SURFACE, CONSOMMABLES POUR SPECTROSCOPIE RAMAN

(30) Priority: 23.10.2009 DK 200901149
(43) Date of publication of application: 29.08.2012
(73) Proprietor: Danmarks Tekniske Universitet, 2800 Kongens Lyngby (DK)
(72) Inventor: SCHMIDT, Michael Stenbæk, DK-2450 Copenhagen SV (DK); BOISEN, Anja, DK-3460 Birkerød (DK); HÜBNER, Jörg, DK-3140 Aalsgaarde (DK)
(74) Representative: Inspicos P/S
(86) International application number: PCT/DK2010/050284
(87) International publication number: WO 2011/047690

(56) References cited:
- DE-A1-102007 037 201
- US-A1- 2006 054 881
- US-A1- 2006 164 634
- US-A1- 2007 153 267
- US-A1- 2008 024 776
- PIO M S ET AL: "Batch fabrication of nanopillars for autonomous nanofluidic SERS arrays", MATERIALS RESEARCH SOCIETY SYMPOSIUM PROCEEDINGS, MATERIALS RESEARCH SOCIETY, USA, vol. 729, 1 April 2002 (2002-04-01), pages 179-184, XP009128473, ISSN: 0272-9172
- JING TANG ET AL: "Silver-coated Si nanograss as highly sensitive surface-enhanced Raman spectroscopy substrates", APPLIED PHYSICS A; MATERIALS SCIENCE & PROCESSING, SPRINGER, BERLIN, DE, vol. 96, no. 4, 27 June 2009 (2009-06-27), pages 793-797, XP019739006, ISSN: 1432-0630, DOI: DOI:10.1007/S00339-009-5305-0
- MIN HU ET AL: "Metal-coated Si nanograss as highly sensitive SERS sensors", PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, vol. 7312, 13 April 2009 (2009-04-13), XP002618045, ISSN: 0277-786X cited in the application

## Description

The invention relates to surface enhanced Raman spectroscopy (SERS). More particularly, the invention relates to SERS-active structures including features having nanoscale dimensions, methods for forming SERS-active structures, and methods for performing SERS using SERS-active structures.

Raman spectroscopy is a well-known technique for performing chemical analysis. In conventional Raman spectroscopy, high intensity monochromatic light provided by a light source, such as a laser, is directed onto an analyte (or sample) that is to be chemically analyzed. A majority of the incident photons are elastically scattered by the analyte molecule. In other words, the scattered photons have the same energy, and thus the same frequency, as the photons that were incident on the analyte. However, a small fraction of the photons (i.e., about 1 in 10⁷ photons) are inelastically scattered by the analyte molecules. These inelastically scattered photons have a different frequency than the incident photons. This inelastic scattering of photons is termed the "Raman effect." The inelastically scattered photons may have frequencies greater than, or, more typically, less than the frequency of the incident photons.

When an incident photon collides with a molecule, energy may be transferred from the photon to the molecule or from the molecule to the photon. When energy is transferred from the photon to the molecule, the scattered photon will emerge from the sample having a lower energy and a corresponding lower frequency. These lower-energy Raman scattered photons are commonly referred to in Raman spectroscopy as the "Stokes radiation." A small fraction of the analyte molecules are already in an energetically excited state. When an incident photon collides with an excited molecule, energy may be transferred from the molecule to the photon, which will emerge from the sample having a higher energy and a corresponding higher frequency. These higher-energy Raman scattered photons are commonly referred to in Raman spectroscopy as the "anti-Stokes radiation."

The Stokes and the anti-Stokes radiation is detected by a detector, such as a photomultiplier or a wavelength-dispersive spectrometer, which coverts the energy of the impinging photons into an electrical signal. The characteristics of the electrical signal are at least partially a function of the energy (or wavelength, frequency, wave number, etc.) of the impinging photons and the number of the impinging photons (intensity). The electrical signal generated by the detector can be used to produce a spectral graph of intensity as a function of frequency for the detected Raman signal (i.e., the Stokes and anti-Stokes radiation). A unique Raman spectrum corresponding to the particular analyte may be obtained by plotting the frequency of the inelastically scattered Raman photons against the intensity thereof. This unique Raman spectrum may be used for many purposes such as identifying an analyte, identifying chemical states or bonding of atoms and molecules in the analyte, and determining physical and chemical properties of the analyte. Raman spectroscopy may be used to analyze a single molecular species or mixtures of different molecular species. Furthermore, Raman spectroscopy may be performed on a number of different types of molecular configurations, such as organic and inorganic molecules in either crystalline or amorphous states.

Molecular Raman scattering of photons is a weak process. As a result, powerful, costly laser sources typically are used to generate high intensity excitation radiation to increase the weak Raman signal for detection. Surface enhanced Raman spectroscopy (SERS) is a technique that allows for generation of a stronger Raman signal from an analyte relative to conventional Raman spectroscopy. In SERS, the analyte molecules are adsorbed onto, or placed adjacent to, an activated metal surface or structure (a "SERS-active structure"). The interactions between the molecules and the surface cause an increase in the strength of the Raman signal. The mechanism of Raman signal enhancement exhibited in SERS is not completely understood. Two main theories of enhancement mechanisms have been presented in the literature: electromagnetic enhancement and chemical (or "first layer") enhancement.

Several SERS-active structures have been employed in SERS techniques, including activated electrodes in electrolytic cells, activated metal colloid solutions, and activated metal substrates such as a roughened metal surface or metal "islands" formed on a substrate. For example, it has been shown that adsorbing analyte molecules onto or near a specially roughened metal surface made from gold or silver may enhance the Raman scattering intensity by factors of between 10³ and 10⁶.

Recently, SERS has been performed employing randomly oriented nanometer scale needles, particles, and wires, as opposed to a simple roughened metallic surface. The intensity of the Raman scattered photons from a molecule adsorbed on such a metal surface may be increased by factors as high as 10¹⁴. However, the intensity of the Raman scattered photons could be further increased if there was a method for forming SERS-active structures including nanoscale features having well controlled size, shape, location, and orientation. Also, the inability to produce such SERS-active structures is impeding research directed to completely understanding the enhancement mechanisms, and therefore, the ability to optimize the enhancement effect. In addition, SERS-active structures require significant time and money to produce. If these problems can be overcome, the performance of nanoscale electronics, optoelectronics, and molecular sensors may be significantly improved.

Relevant systems may be seen in: Pio, M.S. et al.: "Batch fabrication of nanopillars for autonomous nanofluidic SERS arrays", Materials Research Society Symposium Proceedings, Materials Research Society, USA, Vol. 729, 1 April 2002, pages 179-184; US 2006/054881, Tang, Jing et al: "Silver-coated Si nanograss as highly sensitive surface-enhanced Raman spectroscopy substrates", Applied Physics A; Materials Science & Processing, Springer, Berlin, Germany, Vol. 96, No. 4, 27 June 2009, pages 793-797; Hu, Min et al: "Metal Coated Si Nanograss as Highly Sensitive SERS Sensors", Proceedings of the Spie - The International Society for Optical Engineering Spie - The International Society for Optical Engineering, USA, Vol. 7312, 13 April 2009; DE 10 2007 037201, US 2006/164634, US 2007/153267, and US 2008/024776. Accordingly, there is a need for SERS-active structures including nanoscale features having well controlled size, shape, location, and orientation, and a method for their manufacture. In addition, there is a need for a method for producing high quantities of such SERS-active structures at relatively low cost.

The present invention, in a number of embodiments, generally includes SERS-active structures including features having nanoscale dimensions, methods for forming SERS-active structures, and methods for performing SERS using SERS-active structures.

A SERS-active structure is disclosed that includes a substrate and at least one nano-pillar disposed on the substrate. The at least one nano-pillar includes a core including a first material and a coating including a SERS-active material.

The invention also relates to a SERS system including a SERS-active structure, a light source configured to irradiate light onto the SERS-active structure, and a detector configured to receive Raman-scattered light scattered by an analyte when the analyte is located adjacent the SERS-active structure.

The invention further relates to a method for performing SERS, the method including the steps of providing a SERS-active structure, providing an analyte adjacent the SERS-active structure, irradiating the analyte and the SERS-active structure with excitation radiation, and detecting Raman scattered radiation scattered by the analyte.

Also disclosed is a method for forming a SERS-active structure. The method includes the steps of providing a substrate, the formation of at least one nano-pillar core of semiconductor material, and forming a coating of SERS-active material on the at least one nano-pillar core.

More particularly, and in a first aspect, the invention relates to a SERS-active structure according to claim 1.

The nano-pillars are at least substantially cylindrical at least to within a production uncertainty in that the below-mentioned leaning will then be equally possible in all directions.

In a preferred embodiment, the nano-pillars are at least substantially cylindrical with a diameter of from about 5 nm to about 200 nm, such as from about 5 nm to about 50 nm.

The core may consist of a single crystal.

The coating of the at least one nano-pillar may include any SERS-active material such as, for example, gold, silver, copper, platinum, palladium, aluminum, or any other material that will enhance the Raman scattering of photons by analyte molecules positioned adjacent thereto. It may be advantageous that the coating has a rough surface.

Preferably, the at least one nano-pillar created on the substrate extends from a surface of the substrate in a direction perpendicular or substantially perpendicular thereto.

Preferably, at least one nano-pillar has a height of 50 nm to 5 µm.

In one situation, each nano-pillar of the plurality of nano-pillars is created at a predetermined location on a surface of the substrate. Then, the plurality of nano-pillars may comprise an array of nano-pillars.

Each nano-pillar of the plurality of nano-pillars may be separated from adjacent nano-pillars by a distance of between about 1 and about 200 nanometers.

It may be desired that the distance separating each nano-pillar of the plurality of nano-pillars from adjacent nano-pillars is selected to correspond to the size of a particular analyte molecule to be analyzed with the SERS-active structure.

As mentioned above, these clusters or close inter-tip distances lead to increased sensitivity.

A second aspect of the invention relates to a SERS system according to claim 5.

Naturally, the substrate is the substrate according to the first aspect.

A third aspect of the invention relates to a method according to claim 6.

Again, the substrate is that of the first aspect.

The step of detecting may comprise detecting Raman scatted radiation scattered by a single molecule.

The step of providing the SERS-active structure comprises the step of forming nano-pillar arrays may comprise Reactive Ion Etching (RIE) without necessitating a photolithographic step and/or without necessitating any prior masking step.

The step of providing the SERS-active structure comprises the step of forming nano-pillar arrays may comprise Reactive Ion Etching (RIE) using one or more of:
- a SF6 and O2 plasma,
- a SF6 and O2 plasma without fluorocarbon passivation and
- a SF6 and O2 plasma with a SF6 : O2 ratio of 0.8 to 1.2.

The step of providing the SERS-active structure comprises the step of forming nano-pillar arrays may comprise Reactive Ion Etching (RIE) at one or more of:
- a chamber pressure of 1.067 to 10 Pa (8 to 75 mTorr),
- a platen power of 70 to 160 W,
- a coil power of 0 to 3000 W,
- temperatures of 20 to -20°C, such as at temperatures of 0 to -10°C.

The step of providing the SERS-active structure comprises the step of forming nano-pillar arrays may comprise Reactive Ion Etching (RIE) for durations of 1 to 20 minutes.

The step of providing a SERS-active structure comprises the step of forming a coating of SERS-active material on the at least one nano-pillar core may comprise one or more of:
- sputtering one of gold, silver, copper, platinum, palladium, and aluminum onto the at least one nano-pillar core,
- depositing one of gold, silver, copper, platinum, palladium, and aluminum onto the at least one nano-pillar core using one of thermal evaporation and electron beam evaporation, and
- electroless plating the at least one nano-pillar core with one of gold, silver, copper, platinum, palladium, and aluminum.

In the following, preferred embodiments of the invention will be described with reference to the accompanying drawings in which:
FIG. 1 is a schematic of a fabrication process of a SERS-active structure according to the invention,
FIG. 2A-D is SEM images of various micro- and nanostructures both according to and not according to the invention;
FIG. 3A and B is a top view of an exemplary embodiment of a SERS-active structure according to the invention;
FIGS. 4A and B is a top view of an exemplary embodiment of a SERS-active structure according to the invention;
FIGS. 5A and B is a comparison of the spectrum of rhodamine 6G on a substrate according to the invention and a commercially available substrate; and
FIGS. 6A and B is a comparison of the spectrum of a self assembling monolayer of thiophenol on a substrate according to the invention and a commercially available substrate;

The present invention, in a number of embodiments, includes SERS-active structures including features having nanoscale dimensions disposed at predetermined locations on a substrate, methods for forming SERS-active structures, SERS systems including SERS-active structures, and methods for performing SERS using such systems.

The methods disclosed herein allow for the fabrication of SERS-active structures, including nanoscale features having well controlled size, shape, and location, which allows for improved enhancement of the Raman scattered signal intensity relative to previous SERS-active structures.

It should be understood that the illustrations presented herein are not meant to be actual views of any particular SERS-active structure, but are merely idealized representations which are employed to describe the present invention.

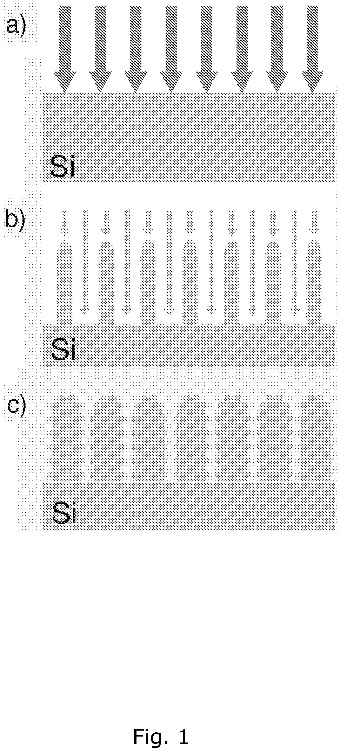

Referring to FIG. 1, which is a schematic of the fabrication process in which in a) A blank silicon wafer is structured by maskless reactive ion etching to form free standing nano-pillars, in b) The pillars are coated with metal by electron beam evaporation, and in c) The resulting structure are free standing metal coated nano-pillars with rough surfaces, the SERS-active structure may include a plurality of nano-pillars disposed in an array on a surface of the substrate, each nano-pillar of the array being disposed at a predetermined location on the surface of the substrate. In one situation, the SERS-active structure includes nano-pillars formed in rows and columns, each nano-pillar separated from adjacent nano-pillars by a predetermined distance (FIG. 1). The predetermined distance may be between about 1 nm and about 5 µm, but is preferably between about 1 and about 300 nanometers. In general, the predetermined distance may be selected to correspond to the size of a particular analyte molecule to be analyzed with the SERS-active structure, such that the molecule is capable of draping between two adjacent nano-pillars, part of the molecule being adsorbed on a first nano-pillar and another part of the molecule being adsorbed on a second, adjacent nano-pillar. Such a configuration has been shown to significantly enhance the Raman signal emitted by the analyte molecule.

The fabrication process is based on a reactive ion plasma etch (RIE) of undoped 101.6 mm (4 inch) diameter polished single crystal silicon wafers, which forms aperiodic arrays of silicon nano-pillars. The silicon nano-pillars are subsequently coated by a layer of gold and/or silver, see Fig. 1 The etching process is self-masking, hence eliminating the need for a time consuming photolithographic patterning step. An Advanced Silicon Etcher (Surface Technology Systems MESC Multiplex ICP) was operated at a SF6:O2 ratio of 1 to 1.12, a platen power of 110 - 130 W and a chamber pressure of 1 to 7.5 Pa (8 to 56 mTorr) to form nanostructured silicon peaks at a rate of approximately 2 nm/s. Since the etch time defines the height of the peaks the height can be tailored.

One or more nano-pillars may be formed at each region of exposed silicon material. The size, shape, and number of the nano-pillar s may be modified by varying the pressure and SF6:O2 ratio of the etching process. For example, a large number of small nano-pillars are formed at lowest pressures.

The length of the nano-pillar cores may correspond to the time duration of the etching process.

After the cores of the nano-pillars have been formed, a coating of SERS-active material is deposited over the cores to form the SERS-active structure. The SERS-active material may also be deposited over the active surface of the substrate, the surface from which the nano-pillars extend. The SERS-active material may include materials such as, for example, gold, silver, copper, platinum, palladium, aluminum, or any other material that will enhance the Raman scattering of photons by analyte molecules positioned adjacent thereto. The coating of SERS-active material may be formed by physical deposition techniques, including but not limited to sputtering, thermal evaporation, and electron beam evaporation. Alternatively, the coating of SERS-active material may be deposited by chemical deposition techniques such as, for example, electroless plating. The thickness of the coating of SERS-active material may be between about 0.1 and about 300 nanometers.

Metallization was preferably performed by electron beam evaporation (Alcatel SCM 600) at deposition rates of 10 Å/s at pressures of 2 x 10⁻⁶ mbar. The metal layer thickness could be varied with an accuracy of ± 5 nm and metallization thicknesses of 50 to 400 nm in 50 nm intervals were applied. Gold and silver layers and mixtures of both were tested.

The preferred excitation source for Raman spectroscopy was a near-infrared external cavity stabilized diode laser with a wavelength of 785 nm (Torsana Laser Technology) and a power of approximately 150 mW at the sample surface with a probe spot diameter of 160 µm (InPhotonics). Spectra were obtained using both 100 µM Rhodamine 6G and self assembling monolayers of thiophenol deposited on the sample surfaces.

Due to the close control of process parameters in the two machines used, the silicon nanostructures could be fine-tuned to create suitable surfaces for Raman enhancement. Both the height and concentration of pillars could be controlled in the RIE process.

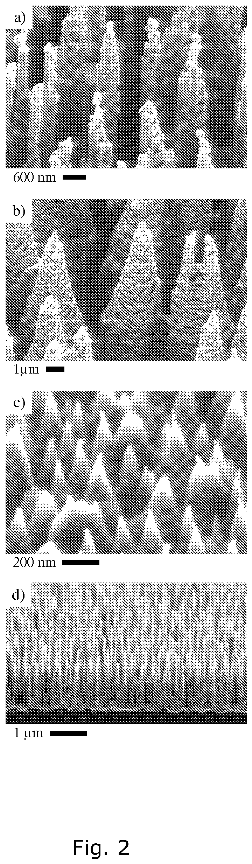

Fig. 2 shows examples of four different silicon nanostructures obtainable using maskless RIE. In figure 2, a) and b) substrates are illustrated which have been metalized. Note the different scale bars. The nanostructure which is shown in Fig. 2a) is a reproduction of the samples that have previously been demonstrated at DTU Nanotech. The side wall angle or taper of the nano-pillars could be controlled by adjusting the SF6:O2 ratio in the plasma to give more conical shaped peaks as illustrated by Fig. 2b). Furthermore, the peak concentration could be controlled by adjusting the chamber pressure as illustrated by the resulting nanostructures shown in Fig. 2c). For SERS applications we found that both the shape and the density of the pillars are key variables.

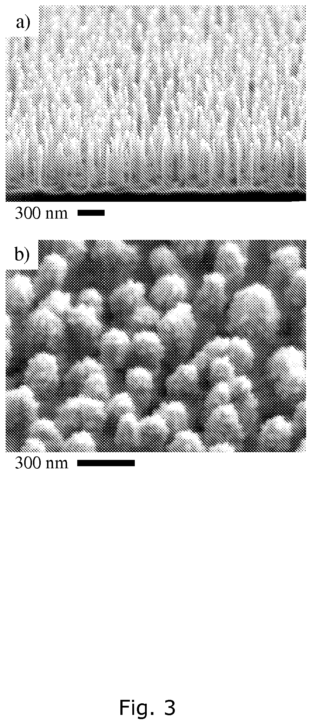

Another exemplary embodiment of a SERS-active structure according to the invention in shown in FIG. 3, illustrating SEM images of silicon nano-pillars a) before (tilted 70 °) and b) after metalization with 250 nm silver (tilted 45 °). A SERS-active structure includes a substrate and a plurality of nano-pillars disposed on a surface of the substrate. Each nano-pillar of the plurality of nano-pillars may extend from a surface of the substrate in a direction substantially perpendicular thereto.

As seen in FIG. 3, each nano-pillar may have a diameter different from the diameter of other nano-pillars, thereby providing nano-pillars of varying sizes. In addition, the nano-pillars are not arranged in rows and columns, or in an array, as are the nano-pillars of the SERS-active structure (FIG. 1). The nano-pillars may be separated from adjacent nano-pillars by a distance that is within a predetermined range, some of the nano-pillars being spaced closer than others. The predetermined range may be between about 1 nm and about 5 µm, but is prefereably between about 1 and about 300 nanometers. In addition, the predetermined range may be selected to provide a range of distances that correspond to the size of various analyte molecules to be analyzed with the SERS-active structure, such that the molecules are capable of spanning between at least two adjacent nano-pillars.

As seen by comparing Fig. 2d) with Fig. 3a) the height of the pillars (1.6 µm and 670 nm respectively) is a function of etching time. The side wall angles, inter peak distances and shape of the pillars appeared unaffected by prolonging the etch time.

Greatest Raman enhancement was achieved with vertical pillars with a peak density of 2 x 10⁹ peaks/cm², Fig. 3a). This is two orders of magnitude more peaks per unit area than for the pillars shown in Fig. 2a) (4 x 10⁷ peaks/cm²). The Raman enhancement using the new protocol was approximately 110 times larger than the less dense peak arrays shown in Fig. 2a). Based on measurements on polished silver substrates the enhancement factor of the silver coated nano-pillars was on the order of 10⁹. Hence one of the reasons for the large increases in Raman enhancement is thus to be found in the larger number of peaks in the excitation spot. Furthermore, the nature of peak metallization is critical in order to obtain optimal enhancement. The best enhancement was measured when the peaks were completely coated with metal. This was difficult to obtain for the larger pillars shown in Fig. 2a)-b) which could be an additional reason for the less than optimal Raman enhancement. Smaller pillars, which were 20 - 100 nm wide before coating, could grow to more than the double in size after metallization. An issue is the risk of burying the pillars by depositing too much metal. Hence the metallization process had to be tailored to the silicon nanostructures. Pillars with a height of ∼500 nm were used for metallization optimizations where a 250 nm layer of silver was found to give the largest Raman enhancement.

Scanning electron microscopy (SEM) investigations showed that the metal coatings formed rough layers with what appeared to be lumps embedded in the metal layers coating the silicon pillars, see Fig. 3b). The large enhancement effects measured on these substrates is hypothesized to be partially due to hot spots forming between these nanosized particles in the rough metal layer.

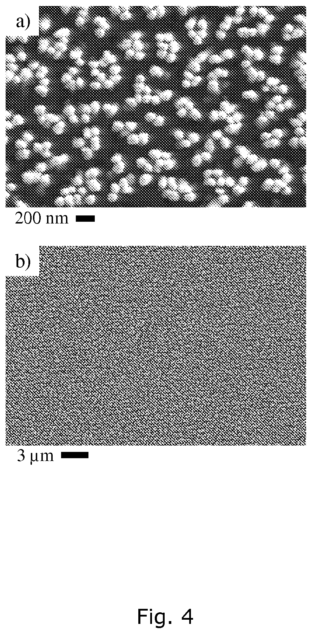

It was also seen that after metallization the pillars leaned towards each other to form clusters as shown in Fig. 4a). Figure 4 illustrates SEM images using secondary electrons taken at a right angle to the surface. a) High magnification image of the nano-pillars. A large number of hot spots are believed to form in the spaces between the pillars lying closest together thus accounting for the large enhancement of the Raman signal. b) A uniform distribution of metal covered nano-pillars are seen over a large area. This nanostructure is repeated over an area of 28 cm² on a 101.6 mm (4 inch) silicon wafer. The inter distances between the tips of the pillars are on the order of 0-10 nm. This agglomeration is hypothesized to lead to further formation of surface plasmon resonance hot spots. Furthermore, it has been suggested that aperiodic arrays have larger Raman enhancing properties than regular periodic arrays. As it is clearly seen in Fig. 4a) the surfaces are aperiodic on the nanoscale.

The silicon nanostructures could be produced uniformly over relatively large areas, Fig. 4b). Neglecting edge effects, most of a 101.6 mm (4 inch) wafer (∼28 cm²) contains Raman enhancing area. Upscaling the process to larger wafers is believed achievable facilitating large scale fabrication of SERS surfaces.

An exemplary method for making the SERS-active structure is one wherein a substrate may be provided including a wafer or die of, for example, silicon or germanium, or any other semiconductor material. Next, an oxide layer is formed on or in a surface of the substrate. Various methods for forming an oxide layer on or in a surface of a substrate are known in the art of microdevice fabrication. A portion or portions of the oxide layer may be photolithographically removed to form regions of exposed silicon material of the underlying substrate. For example, the oxide layer may be masked and etched to remove portions thereof. Each region of exposed silicon material may be disposed at the predetermined locations where the nano-pillars are to be formed. The regions of exposed silicon material may have substantially the same predetermined size and shape as the core of the nano-pillars. Alternatively, as is described further below, a more random pattern may also be obtained.

While the nano-pillars are illustrated in FIGS. 2 and 4G as being of equal length and extending in parallel directions, the nano-pillars may have different lengths but will not extend in nonparallel directions relative to other nano-pillars.

An exemplary SERS system according to the invention may include one of the exemplary SERS-active structures, and may be used to perform surface enhanced Raman spectroscopy. The SERS system may include a sample or analyte stage, an excitation radiation source, and a detector. The analyte stage may include a SERS-active structure as described above. The SERS system also may include various optical components positioned between the excitation radiation source and the analyte stage, and various optical components positioned between the analyte stage and the detector.

The excitation radiation source may include any suitable source for emitting radiation at the desired wavelength, and may be capable of emitting a tunable wavelength of radiation. For example, commercially available semiconductor lasers, helium-neon lasers, carbon dioxide lasers, light emitting diodes, incandescent lamps, and many other known radiation emitting sources may be used as the excitation radiation source. The wavelengths that are emitted by the excitation radiation source may be any suitable wavelength for properly analyzing the analyte using SERS. An exemplary range of wavelengths that may be emitted by the excitation radiation source includes wavelengths between about 350 nm and about 1000 nm.

The excitation radiation emitted by the source may be delivered either directly from the source to the analyte stage and the SERS-active structure. Alternatively, collimation, filtration, and subsequent focusing of the excitation radiation may be performed by optical components before the excitation radiation impinges on the analyte stage and the SERS-active structure.

The SERS-active structure of the analyte stage may enhance the Raman signal of the analyte, as discussed previously. In other words, irradiation of the SERS-active structure by excitation radiation may increase the number photons inelastically scattered by an analyte molecule positioned near or adjacent to the SERS-active structure.

The Raman scattered photons may be collimated, filtered, or focused with optical components. For example, a filter or a plurality of filters may be employed, either as part of the structure of the detector, or as a separate unit that is configured to filter the wavelength of the excitation radiation, thus allowing only the Raman scattered photons to be received by the detector.

The detector receives and detects the Raman scattered photons and may include a monochromator (or any other suitable device for determining the wavelength of the Raman scattered photons) and a device such as, for example, a photomultiplier for determining the quantity of Raman scattered photons (intensity).

Ideally, the Raman scattered photons are scattered isotropically, being scattered in all directions relative to the analyte stage. Thus, the position of the detector relative to the analyte stage is not particularly important. However, the detector may be positioned at, for example, an angle of 90.degree. relative to the direction of the incident excitation radiation to minimize the intensity of the incident excitation radiation that may be incident on the detector.

To perform SERS using the system, a user may provide an analyte molecule or molecules adjacent to the SERS-active structure. The analyte and the SERS-active structure are irradiated with excitation radiation or light from the source. Raman scattered photons scattered by the analyte are then detected by the detector.

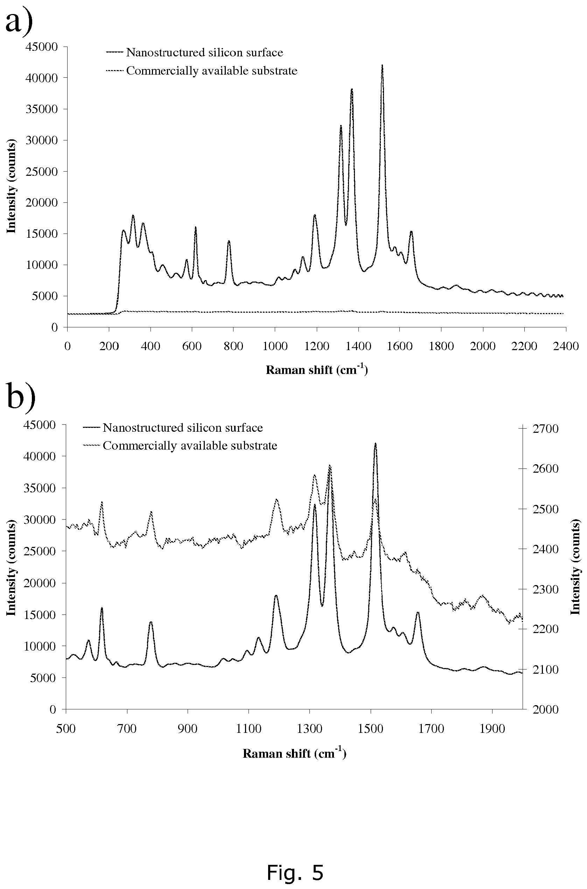

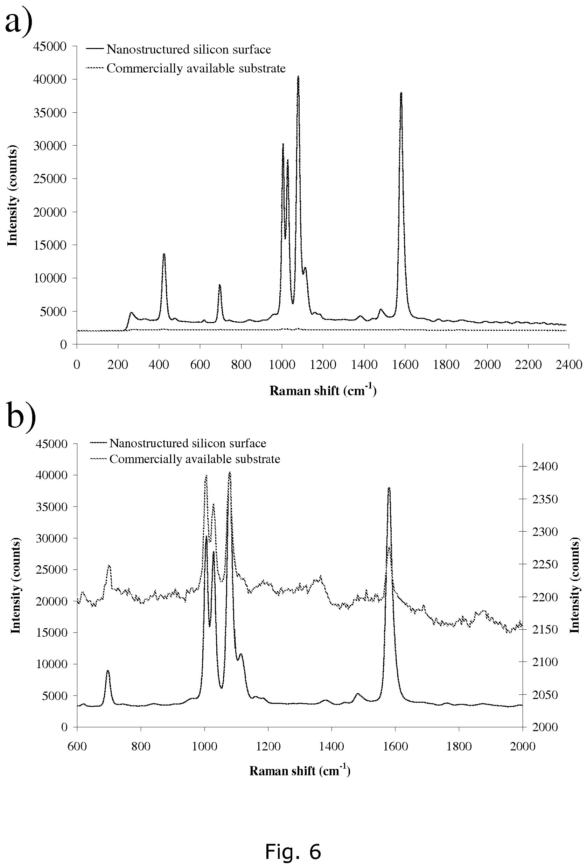

Examples of Raman spectra of Rhodamine 6G and thiophenol obtained on the nanostructured silicon surfaces with silver coatings are shown in Fig. 5 and Fig. 6 respectively, with the results obtained on a commercially available SERS substrate overlain for comparison. More precisely, figure 5 illustrates: a) The Raman spectrum of a 1 µL of 100 µM rhodamine 6G dropped onto the silver coated nanostructured surface shown in Fig. 3b) and on a commercially available substrate (gold coated) using the same y-axis. b) For clarity the gold coated commercial substrate is plotted on a second y-axis. The spectra were obtained using 785 nm excitation with an integration time of 1 second. Also, Figure 6 illustrates: a) The Raman spectrum of a self assembling monolayer of thiophenol on the silver coated nanostructured surface shown in Fig. 3b) and on a commercially available substrate (gold coated) using the same y-axis. b) For clarity the commercial substrate is plotted on a second y-axis. The spectra were obtained using 785 nm excitation with an integration time of 0.5 seconds.

It is seen that the signal to noise ratio measured on the silver coated silicon nano-pillars shown in Fig. 4 is an improvement compared to the commercial substrate. In all fairness it should be mentioned that the commercial substrate is a gold structure which is known to have a weaker Raman enhancement than silver. However, gold covered silicon nano-pillars are still two orders of magnitude better Raman enhancers (not shown here) than the commercial substrate.

Relatively large areas (∼28 cm²) of uniform Raman enhancing surfaces can be routinely produced in a two-step process which takes no more than 20 minutes from start to finish of where most of this time is spent pumping to vacuum. The RIE process is narrowly controlled by the processing equipment hence enabling the tailoring of diverse silicon nanostructures as demonstrated in Fig. 2. We find that this technique is superior to current electron beam lithography defined surfaces in terms of cost and time and it is more reproducible than chemically deposited rough metal layers and metallic nanoparticle arrays.

Some examples of producing SERS substrates using self-masking silicon processes followed by electron beam metal evaporation have been reported in the literature. In E. D. Diebold, N. H. Mack, S. K. Doorn and E. Mazur, "Femtosecond laser-nanostructured substrates for surface enhanced Raman scattering," Langmuir, vol. 25 (3), 2009, pp. 1790-1794, an enhancement factor on the order of 107 is reported on silver coated silicon nanostructures. The difference in the precently obtained enhancement compared to the enhancement factor reported in Diebold possibly lies in the inter peak distance. An increase in enhancement factor is seen with decreasing inter peak distance. Therefore, it is believed Raman enhancement can be improved by finding the optimal inter peak distance. Furthermore, the amount of metal deposited suitably is adjusted to this inter peak distance in order to avoid forming a continuous metal layer lying on top of the peaks.

Hu et al. (M. Hu, J. Tang, F.S. Ou, H.P. Kuo, S.-Y. Wang, Z. Li and R.S. Williams, "Metal coated Si nanograss as highly sensitive SERS sensors," Proceedings of the SPIE, vol. 7312 (1), 2009, pp. 73120I-73120I-6) report an enhancement factor of 6 x 107 on silver coated silicon nanostructures very similar to those shown in Fig. 2c). Hu also suggests that metal nanoparticles on the sides of the peaks are responsible for the observed Raman enhancement effect and is thus in agreement with the present observations. It should be noted that the conical peaks in Hu and Fig. 2c) do not appear to be uniform in height. It is hypothesized that the present increase in enhancement factor compared to Hu can be attributed to the clustering enabled by the mechanical movement of the high aspect ratio vertical silicon nano-pillars shown in Fig. 4a).

It is believed that the present type of structures can be directly used in SERS equipment already in use today for a wide spectrum of chemical and biochemical applications including hand held devices as both reproducibility and enhancement have been improved significantly compared to existing substrates. Due to the simple and quick nature of the fabrication process this production method should be up-scalable thus ultimately enabling a significant reduction in the cost per unit.

The structures and systems disclosed herein may also be used to perform hyper-Raman spectroscopy. When excitation radiation impinges on an analyte molecule, a very small number of photons may be scattered at frequencies corresponding to the higher order harmonics of the excitation radiation, such as the second and third harmonic generations (i.e., twice or three times the frequency of the excitation radiation). Some of these photons may have a frequency that is Raman-shifted relative to the frequencies corresponding to the higher order harmonics of the excitation radiation. These higher order Raman-scattered photons can provide information about the analyte molecule that cannot be obtained by first order Raman spectroscopy. Hyper-Raman spectroscopy involves the collection and analysis of these higher order Raman-scattered photons.

The methods disclosed herein allow for the reproducible formation of SERS-active structures including nanoscale features having well controlled size, shape, location, and orientation.
These structures allow for improved surface-enhanced Raman spectroscopy and may be used to produce molecular sensors having superior sensitivity relative to conventional SERS-active structures. The performance of nanoscale electronics, optoelectronics, molecular sensors, and other devices employing the Raman effect may be significantly improved by using the SERS-active structures disclosed herein. In addition, the methods disclosed herein allow for production of high quantities of SERS-active structures at relatively low cost.

Although the foregoing description contains many specifics, these are not to be construed as limiting the scope of the present invention, but merely as providing certain exemplary embodiments. The scope of the invention is, therefore, indicated and limited only by the appended claims, rather than by the foregoing description.

## Claims

1. A surface enhanced Raman spectroscopy-active (SERS-active) structure comprising: a substrate; and a plurality of nano-pillars created on the substrate, the nano-pillars each comprising: a silicon core having a diameter of 1-200 nm; and a metal coating with a thickness of 50-400 nm and including a SERS-active material, the nano-pillars being separated by a distance of 1-300 nm **characterized in that** the structure comprises clusters of nano-pillars leaning, relative to the substrate, toward each other with a distance between tips of on the order of 0-10 nm.

2. A SERS-active structure according to claim 1, wherein the nano-pillars have a diameter of from about 5 nm to about 50 nm.

3. The SERS-active structure of claim 1, wherein the coating includes one of gold, silver, copper, platinum, palladium, and aluminum.

4. The SERS-active structure of claim 1, wherein the nano-pillars have a height of 50 nm to 5 µm.

5. A SERS system comprising: a SERS-active structure according to claim 1; a light source configured to irradiate light onto the SERS-active structure; and a detector configured to receive Raman-scattered light scattered by an analyte located adjacent the SERS-active structure.

6. A method for performing SERS comprising: providing a SERS-active structure according to claim 1; placing an analyte adjacent to the SERS-active structure; irradiating the analyte and the SERS-active structure with excitation radiation; and detecting Raman scattered radiation scattered by the analyte.

7. The method of claim 6, wherein the step of providing the SERS-active structure comprises the step of forming nano-pillar arrays, which step comprises Reactive Ion Etching (RIE) without necessitating a photolithographic step.

8. The method of claim 6, wherein the step of providing the SERS-active structure comprises the step of forming nano-pillar arrays, which step comprises Reactive Ion Etching (RIE) without necessitating any prior masking step.

9. The method of claim 6, wherein the step of providing the SERS-active structure comprises the step of forming nano-pillar arrays, which step comprises Reactive Ion Etching (RIE) using one or more of:
- a SF6 and O2 plasma,
- a SF6 and O2 plasma without fluorocarbon passivation and
- a SF6 and O2 plasma with a SF6 : O2 ratio of 0.8 to 1.2.

10. The method of claim 6, wherein the step of providing the SERS-active structure comprises the step of forming nano-pillar arrays, which step comprises Reactive Ion Etching (RIE) at one or more of:
- a chamber pressure of 1.067 to 10 Pa (8 to 75 mTorr),
- a platen power of 70 to 160 W, and
- a coil power of 0 to 3000 W.

11. The method of claim 6, wherein the step of providing the SERS-active structure comprises the step of forming nano-pillar arrays, which step comprises Reactive Ion Etching (RIE) for durations of 1 to 20 minutes.

12. The method of claim 6, wherein the step of providing the SERS-active structure comprises the step of forming nano-pillar arrays, which step comprises Reactive Ion Etching (RIE) at temperatures of 20 to -20°C, such as at temperatures of 0 to -10°C.

13. The method of claim 6, wherein the step of providing the SERS-active structure comprises the step of forming a coating of SERS-active material on the at least one nano-pillar core, which step comprises one or more of:
- sputtering one of gold, silver, copper, platinum, palladium, and aluminum onto the at least one nano-pillar core,
- depositing one of gold, silver, copper, platinum, palladium, and aluminum onto the at least one nano-pillar core using one of thermal evaporation and electron beam evaporation, and
- electroless plating the at least one nano-pillar core with one of gold, silver, copper, platinum, palladium, and aluminum.

## Patentansprüche

1. Oberflächenverstärkte Raman-Spektroskopie-aktive (SERS-aktive) Struktur, die umfasst: ein Substrat; und eine Vielzahl von Nanosäulen, die auf dem Substrat erzeugt sind, wobei die Nanosäulen jeweils umfassen: einen Siliziumkern mit einem Durchmesser von 1-200 nm; und eine Metallbeschichtung mit einer Dicke von 50-400 nm, die ein SERS-aktives Material enthält, wobei die Nanosäulen durch einen Abstand von 1-300 nm getrennt sind, **dadurch gekennzeichnet, dass** die Struktur Cluster von Nanosäulen umfasst, die sich relativ zum Substrat zueinander mit einem Abstand zwischen Spitzen in der Größenordnung von 0-10 nm neigen.

2. SERS-aktive Struktur nach Anspruch 1, wobei die Nanosäulen einen Durchmesser von etwa 5 nm bis etwa 50 nm haben.

3. SERS-aktive Struktur nach Anspruch 1, wobei die Beschichtung eine aus der Liste aus Gold, Silber, Kupfer, Platin, Palladium und Aluminium enthält.

4. SERS-aktive Struktur nach Anspruch 1, wobei die Nanosäulen eine Höhe von 50 nm bis 5 µm haben.

5. SERS-System, umfassend: eine SERS-aktive Struktur nach Anspruch 1; eine Lichtquelle, die zum Bestrahlen der SERS-aktiven Struktur mit Licht ausgelegt ist; und einen Detektor, der zum Empfangen von Raman-Streulicht durch einen Analyten ausgelegt ist, der sich neben der SERS-aktiven Struktur befindet.

6. Verfahren zum Ausführen der SERS, umfassend: Bereitstellen einer SERS-aktiven Struktur nach Anspruch 1; Platzieren eines Analyten neben der SERS-aktiven Struktur; Bestrahlen des Analyten und der SERS-aktiven Struktur mit Anregungsstrahlung; und Erfassen von Raman-Streustrahlung, die vom Analyten gestreut wird.

7. Verfahren nach Anspruch 6, wobei der Schritt des Bereitstellens der SERS-aktiven Struktur den Schritt des Bildens von Nanosäulenfeldern umfasst, wobei der Schritt die Reaktive Ionenätzung (RIE) umfasst, ohne einen fotolithografischen Schritt zu erfordern.

8. Verfahren nach Anspruch 6, wobei der Schritt des Bereitstellens der SERS-aktiven Struktur den Schritt des Bildens von Nanosäulenfeldern umfasst, wobei dieser Schritt das Reaktive Ionenätzen (RIE) umfasst, ohne einen vorherigen Maskierungsschritt zu erfordern.

9. Verfahren nach Anspruch 6, wobei der Schritt des Bereitstellens der SERS-aktiven Struktur den Schritt des Bildens von Nanosäulenfeldern umfasst, wobei dieser Schritt das Reaktive Ionenätzen (RIE) umfasst, wobei ein oder mehr Elemente der folgenden verwendet werden:
- ein SF₆- und O₂-Plasma;
- ein SF₆- und O₂-Plasma ohne Fluorkohlenstoff-Passivierung, und
- ein SF₆- und O₂-Plasma mit einem SF₆:O₂-Verhältnis von 0,8 bis 1,2.

10. Verfahren nach Anspruch 6, wobei der Schritt des Bereitstellens der SERS-aktiven Struktur den Schritt des Bildens von Nanosäulenfeldern umfasst, wobei dieser Schritt das Reaktive Ionenätzen (RIE) unter einer oder mehr der folgenden Bedingungen umfasst:
- ein Kammerdruck von 1,067 bis 10 Pa (8 bis 75 mTorr),
- eine Trägerplattenleistung von 70 bis 160 W, und
- eine Spulenleistung von 0 bis 3000 W.

11. Verfahren nach Anspruch 6, wobei der Schritt des Bereitstellens der SERS-aktiven Struktur den Schritt des Bildens von Nanosäulenfeldern umfasst, wobei dieser Schritt die Reaktive Ionenätzung (RIE) für Dauern von 1 bis 20 Minuten umfasst.

12. Verfahren nach Anspruch 6, wobei der Schritt des Bereitstellens der SERS-aktiven Struktur den Schritt des Bildens von Nanosäulenfeldern umfasst, wobei dieser Schritt die Reaktive Ionenätzung (RIE) bei Temperaturen von 20 bis -20 °C umfasst, wie z.B. bei Temperaturen von 0 bis -10 °C.

13. Verfahren nach Anspruch 6, wobei der Schritt des Bereitstellens der SERS-aktiven Struktur den Schritt des Bildens einer Beschichtung aus SERS-aktivem Material auf mindestens einem Nanosäulenkern umfasst, wobei dieser Schritt ein oder mehr von Folgendem enthält:
- Sputtern von einem Element aus Gold, Silber, Kupfer, Platin, Palladium und Aluminium auf den mindestens einen Nanosäulenkern,
- Abscheiden von einem Element aus Gold, Silber, Kupfer, Platin, Palladium und Aluminium auf den mindestens einen Nanosäulenkern unter Einsatz von thermischer Verdampfung und Elektronenstrahlverdampfung,
und
- stromlose Beschichtung von mindestens einem Nanosäulenkern mit einem Element aus Gold, Silber, Kupfer, Platin, Palladium und Aluminium.

## Revendications

1. Structure active pour spectroscopie Raman améliorée en surface (active pour SERS) comprenant : un substrat ; et une pluralité de nano-piliers créés sur le substrat, les nano-piliers comprenant chacun : un noyau de silicium ayant un diamètre compris entre 1 et 200 nm ; et un revêtement métallique d'une épaisseur comprise entre 50 et 400 nm et comprenant un matériau actif pour SERS, les nano-piliers étant séparés par une distance comprise entre 1 et 300 nm **caractérisée en ce que** la structure comprend des amas de nano-piliers penchés, par rapport au substrat, l'un vers l'autre avec une distance entre les pointes de l'ordre allant de 0 à 10 nm.

2. Structure active pour SERS selon la revendication 1, dans laquelle les nano-piliers ont un diamètre allant d'environ 5 nm à environ 50 nm.

3. Structure active pour SERS selon la revendication 1, dans laquelle le revêtement inclut l'un parmi l'or, l'argent, le cuivre, le platine, le palladium et l'aluminium.

4. Structure active pour SERS selon la revendication 1, dans laquelle les nano-piliers ont une hauteur comprise entre 50 nm et 5 µm.

5. Système actif pour SERS comprenant : une structure active pour SERS selon la revendication 1 ; une source de lumière configurée pour irradier de la lumière sur la structure active pour SERS ; et un détecteur configuré pour recevoir une lumière diffusée par Raman diffusée par un analyte situé à proximité de la structure active pour SERS.

6. Procédé de réalisation de SERS comprenant : l'apport d'une structure active pour SERS selon la revendication 1 ; le placement d'un analyte à proximité de la structure active pour SERS ; l'irradiation de l'analyte et de la structure active pour SERS à l'aide d'un rayonnement d'excitation ; et la détection du rayonnement diffusé par Raman diffusé par l'analyte.

7. Procédé selon la revendication 6, dans lequel l'étape d'apport de la structure active pour SERS comprend l'étape de formation de réseaux de nano-piliers, ladite étape comprend la gravure ionique réactive (RIE) sans nécessiter une étape de photolithographie.

8. Procédé selon la revendication 6, dans lequel l'étape d'apport de la structure active pour SERS comprend l'étape de formation de réseaux de nano-piliers, ladite étape comprend la gravure ionique réactive (RIE) sans nécessiter une quelconque étape de masquage préalable.

9. Procédé selon la revendication 6, dans lequel l'étape d'apport de la structure active pour SERS comprend l'étape de formation de réseaux de nano-piliers, ladite étape comprend la gravure ionique réactive (RIE) utilisant un ou plusieurs parmi :
- un plasma à base de SF6 et de O2,
- un plasma à base de SF6 et de O2 sans passivation au fluorocarbure et
- un plasma à base de SF6 et de O2 avec un rapport SF6 : O2 compris entre 0,8 et 1,2.

10. Procédé selon la revendication 6, dans lequel l'étape d'apport de la structure active pour SERS comprend l'étape de formation de réseaux de nano-piliers, ladite étape comprend la gravure ionique réactive (RIE) utilisant un ou plusieurs parmi :
- une pression de chambre comprise entre 1,067 et 10 Pa (entre 8 et 75 mTorr),
- une puissance de platine comprise entre 70 et 160 W, et
- une puissance de bobine comprise entre 0 et 3000 W.

11. Procédé selon la revendication 6, dans lequel l'étape d'apport de la structure active pour SERS comprend l'étape de formation de réseaux de nano-piliers, ladite étape comprend la gravure ionique réactive (RIE) pendant une durée comprise entre 1 et 20 minutes.

12. Procédé selon la revendication 6, dans lequel l'étape d'apport de la structure active pour SERS comprend l'étape de formation de réseaux de nano-piliers, ladite étape comprend la gravure ionique réactive (RIE) à des températures comprises entre 20 et -20 °C, telle qu'à des températures comprises entre 0 et -10 °C.

13. Procédé selon la revendication 6, dans lequel l'étape d'apport de la structure active pour SERS comprend l'étape de formation d'un revêtement de matériau actif pour SERS sur l'au moins un noyau de nano-pilier, ladite étape comprend l'une ou plusieurs parmi :
- la pulvérisation cathodique de l'un parmi l'or, l'argent, le cuivre, le platine, le palladium et l'aluminium sur l'au moins un noyau de nano-pilier,
- le dépôt de l'un parmi l'or, l'argent, le cuivre, le platine, le palladium et l'aluminium sur l'au moins un noyau de nano-pilier en utilisant l'une parmi l'évaporation thermique et l'évaporation de faisceau électronique, et
- le placage autocatalytique de l'au moins un noyau de nano-pilier avec l'un parmi l'or, l'argent, le cuivre, le platine, le palladium et l'aluminium.
